# EUROPEAN PATENT SPECIFICATION

(11) **EP 3 296 553 B1**
(45) Date of publication and mention of the grant of the patent: **28.08.2019**
(21) Application number: 17181505.3
(22) Date of filing: 14.07.2017
(51) Int. Cl.: F02K 3/10, F02C 7/22

(54) **FUEL MANIFOLD FOR AN AUGMENTOR SECTION OF A GAS TURBINE ENGINE**
KRAFTSTOFFVERTEILER FÜR EINEN NACHBRENNERABSCHNITT EINES GASTURBINENMOTORS
COLLECTEUR DE CARBURANT POUR UN SECTION DE POST-COMBUSTION D'UN MOTEUR À TURBINE À GAZ

(30) Priority: 16.09.2016 US 201615267727
(43) Date of publication of application: 21.03.2018
(73) Proprietor: United Technologies Corporation, Farmington, CT 06032 (US)
(72) Inventor: FIGUEROA, Carlos G., Wellington, FL Florida 33414 (US); BELOTTO, Daniel, Palm Beach Gardens, FL Florida 33418 (US); MARKS, Terry J., Rocky Hill, CT Connecticut 06067 (US); TIBERIO, Robert D., West Palm Beach, FL Florida 33415 (US)
(74) Representative: Dehns

(56) References cited:
- WO-A2-2010/024989
- US-A- 2 970 438
- US-A- 3 793 838

## Description

### BACKGROUND

The present disclosure relates to gas turbine engines, and more particularly to a fuel manifold arrangement for an augmentor section of a gas turbine engine.

Gas turbine engines, such as those which power modern military aircraft, include a compressor section to pressurize a supply of air, a combustor section to burn a hydrocarbon fuel in the presence of the pressurized air, and a turbine section to extract energy from the resultant combustion gases and generate thrust. Downstream of the turbine section, an augmentor section, or "afterburner," is operable to selectively increase the thrust. The increase in thrust is produced when fuel is injected into the core exhaust gases downstream of the turbine section and burned with the oxygen contained therein to generate a second combustion.

The augmentor section typically includes an all brazed fuel manifold system in which every circuit of each zone is brazed into a unitary structure. Although effective, the braze is often a gold-nickel braze which is relatively expensive. Further, the unitary structure complicates maintainability as damage to any single circuit or element requires removal of the entire manifold and all zones thereof.

US 3 793 838 A discloses an augmentor fuel injection mounting system, US 2 970 438 A discloses circular fuel spray bars, and WO 2010/024989 A2 discloses a multi passage fuel manifold and methods of construction.

### SUMMARY

According to a first aspect of the present invention, there is provided an augmentor section for a gas turbine engine as set forth in claim 1.

In an embodiment, the first fuel manifold and the second fuel manifold each represent a respective zone of the augmentor section.

In a further embodiment, each of the multiple of brackets includes a saddle to clamp each of the first fuel manifold and the second fuel manifold.

In a further embodiment, each of the multiple of brackets are generally "A" shaped.

In a further embodiment, a first ring of the first fuel manifold is stacked adjacent to a second ring of the second fuel manifold, and the first ring and the second ring is configured to be defined around an engine axis.

According to a further aspect of the present invention, there is provided a method as set forth in claim 7.

In an embodiment, mechanically mounting the first fuel manifold and the second fuel manifold within the support ring through the multiple of brackets includes clamping the first fuel manifold and the second fuel manifold within the support ring to each of the multiple of brackets.

In a further embodiment, nesting the first fuel manifold at least partially within the second fuel manifold includes stacking a first ring of the first fuel manifold adjacent to a second ring of the second fuel manifold, the first ring and the second ring defined around the engine axis.

A further embodiment includes attaching the first fuel manifold and the second fuel manifold to a multiple of spraybars, the first fuel manifold and the second fuel manifold located radially inboard of the spraybars.

A further embodiment includes individually fastening the first fuel manifold and the second fuel manifold such that the first fuel manifold and the second fuel manifold are individually maintainable.

In a further embodiment, the first fuel manifold and the second fuel manifold each represent a respective zone of an augmentor.

The foregoing features and elements may be combined in various combinations without exclusivity, unless expressly indicated otherwise. These features and elements as well as the operation thereof will become more apparent in light of the following description and the accompanying drawings. It should be appreciated, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a general schematic view of an exemplary gas turbine engine embodiment for use with the present disclosure;
Figure 2 is an expanded sectional view of an augmentor vane of the augmentor section;
Figure 3 is a side view of an augmentor fuel injection system;
Figure 4 is a rear view of an augmentor fuel injection system;
Figure 5 is an exploded view of a fuel manifold system for an augmentor fuel injection system;
Figure 6 is a perspective view of the fuel manifold system;
Figure 7 is an expanded perspective view of the fuel manifold system;
Figure 8 is a perspective view of a support ring and bracket assembly for the fuel manifold system;
Figure 9 is a perspective view of a bracket for the fuel manifold system;
Figure 10 is a side view of a bracket for the fuel manifold system; and
Figure 11 is a perspective view of a support ring and alternate bracket assembly for the fuel manifold system.

### DETAILED DESCRIPTION

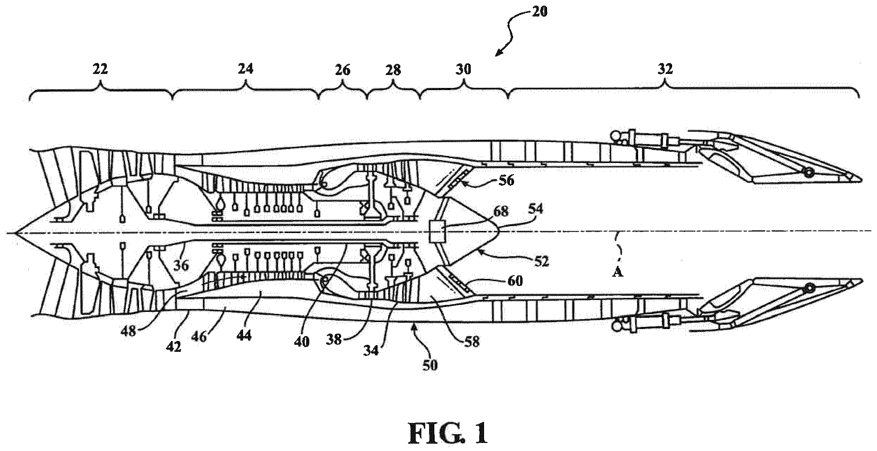

Figure 1 schematically illustrates a gas turbine engine 20. The gas turbine engine 20 is disclosed herein as a two-spool turbofan that generally incorporates a fan section 22, a compressor section 24, a combustor section 26, a turbine section 28, an augmenter section 30 and a nozzle section 32. The sections are defined along a central longitudinal engine axis A. Although depicted as an augmented low bypass gas turbine engine in the disclosed non-limiting embodiment, it should be appreciated that the concepts described herein are applicable to other gas turbine engines including geared architecture engines, direct drive turbofans, turbojet, turboshaft, ramjet and other engine architectures.

The compressor section 24, the combustor section 26 and the turbine section 28 are generally referred to as the engine core. The fan section 22 and a low pressure turbine 34 of the turbine section 28 are coupled by a first shaft 36 to define a low spool. The compressor section 24 and a high pressure turbine 38 of the turbine section 28 are coupled by a second shaft 40 to define a high spool.

An outer engine case structure 42 and an inner engine structure 44 define a generally annular secondary airflow path 46 around a primary airflow path 48 of the engine core. It should be appreciated that various structure within the engine may define the outer engine case structure 42 and the inner engine case structure 44 which essentially define an exoskeleton to support the core engine therein.

Air that enters the fan section 22 is divided between a core flow through the primary airflow path 48 and a secondary airflow through the secondary airflow path 46. The core flow passes through the combustor section 26, the turbine section 28, then the augmentor section 30 where fuel may be selectively injected and burned to generate additional thrust through the nozzle section 32. The secondary airflow may be utilized for a multiple of purposes to include, for example, cooling and pressurization. The secondary airflow as defined herein is any flow different than the primary combustion gas exhaust airflow. The secondary airflow passes through an annulus defined by the outer engine case structure 42 and the inner engine structure 44 then may be at least partially injected into the primary airflow path 48 adjacent the augmentor section 30 and the nozzle section 32.

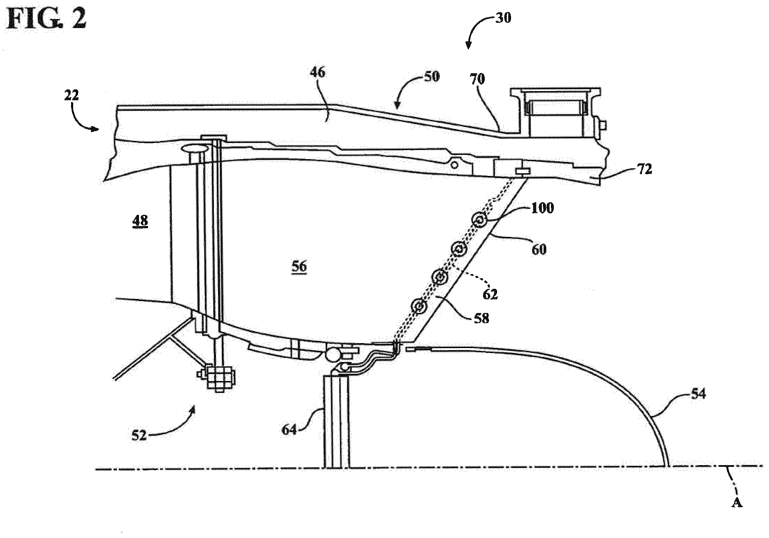

With reference to Figure 2, the augmenter section 30 generally includes a turbine exhaust case (TEC) 50 and a center body 52 with a tail cone 54. The TEC 50 generally includes an outer case 70 of the outer engine case structure 42 and a concentrically spaced inner liner 72 that operates as a heat shield to protect the outer case 70 from the exhaust gas flow in the flow path. Air discharged from, for example, the fan section 22 is communicated through the secondary airflow path 46 defined in part by the outer case 70 and the inner liner 72.

Circumferentially arrayed augmentor vanes 56 extend generally radially between the center body 52 and the TEC 50. Each of the augmentor vanes 56 have circumferentially opposite first and second walls 58, 60 through which secondary airflow is received from the fan duct 46 to cool and pressurize the augmentor vanes 56.

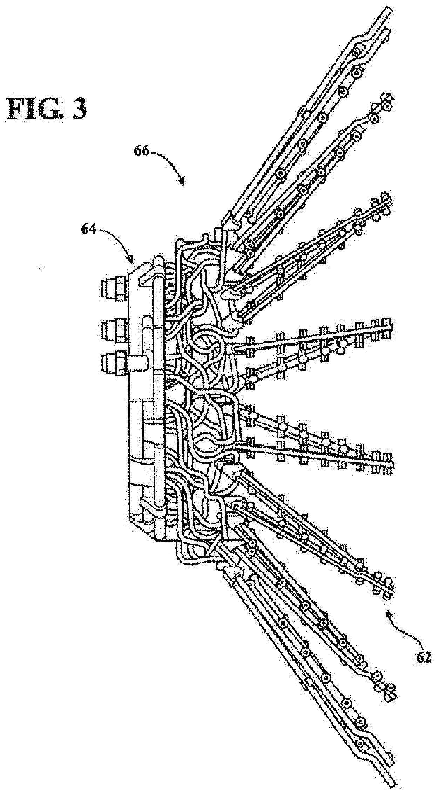

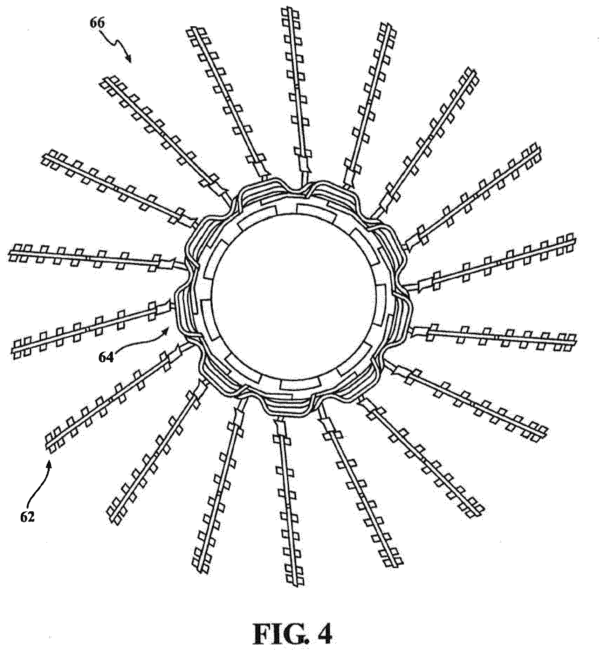

Each or particular augmentor vanes 56 contain a spraybar 62 that extends from a fuel manifold system 64 of an augmentor fuel injection system 66 (also shown in Figures 3 and 4). The fuel manifold system 64 may be located radially inboard such that the spraybars 62 extend radially outward, as shown, or the fuel manifold can alternatively or additionally be placed radially outboard such that the spraybars extend radially inward. The spraybars 62 spray fuel through the circumferentially opposite first and second walls 58, 60 of the augmentor vanes 56 at generally right angles directly into the exhaust gas flow downstream of the turbine section 28. An igniter or pilot system is operated to ignite and maintain ignition of the fuel sprayed from spraybars 62.

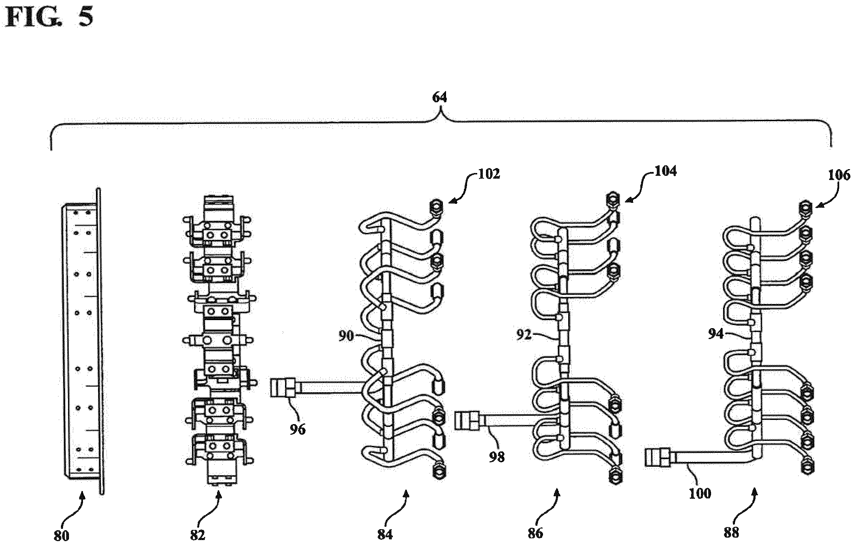

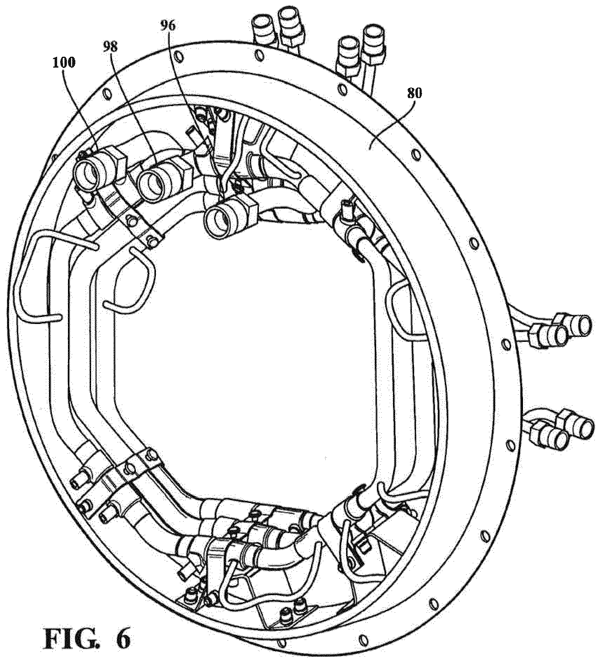

With reference to Figure 5, the fuel manifold system 64 (Figure 6), in the disclosed non-limiting embodiment, generally includes a support ring 80, a multiple of brackets 82, and a multiple of manifold subassemblies 84, 86, 88 (three shown) each of which represent a particular augmentor zone and are nestable one within another. It should be appreciated that although particular components are illustrated additional and alternative components may be included in the fuel manifold system 64.

Each of the multiple of manifold subassemblies 84, 86, 88 is an all welded tubing arrangement that generally includes a respective manifold ring 90, 92, 94, a feed conduit 96, 98, 100, and a respective multiple of outlet pigtails 102, 104, 106 that that distribute the fuel to the each of the associated spraybar systems 62 (Figure 2). The tubing utilized to manufacture each of the multiple of manifold subassemblies 84, 86, 88 may be of an all welded, such as orbital welded, construction, which readily facilitate fuel drainage, minimizes coking and provides a relatively light weight structure. Further, welding is a significantly less expensive operation, especially compared to gold-nickel type brazing.

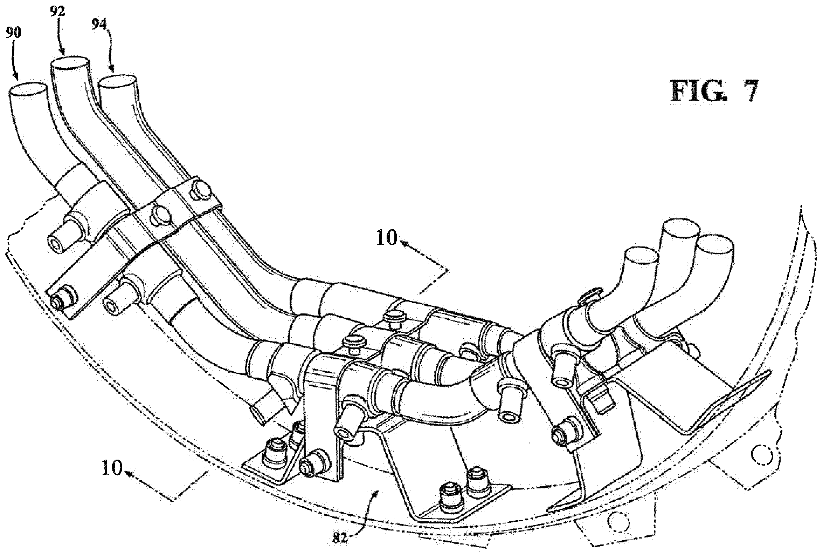

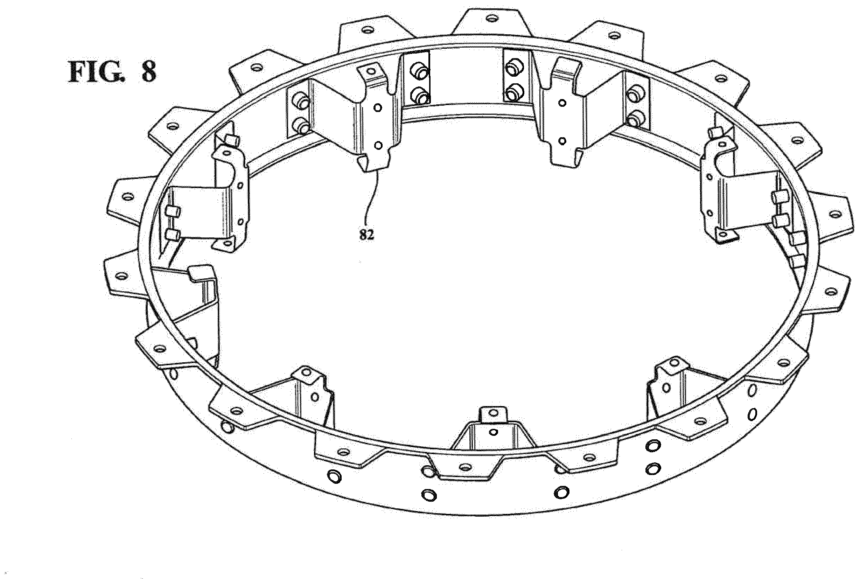

Each of the multiple of manifold subassemblies 84, 86, 88 are respectively nestable such that the manifold rings 90, 92, 94 are stackable in a compact configuration (Figure 7). Each of the multiple of manifold subassemblies 84, 86, 88 are readily uncomplicated to fabricate as each manifold is representative of an individual augmentor zone. Further, the multiple of manifold subassemblies 84, 86, 88 are assembled to the support ring 80 through the multiple of brackets 82 (Figure 8). That is, the fastener type arrangement, e.g., bolted facilitates maintainability through practical disassembly fro repair. The fuel manifold system 64.

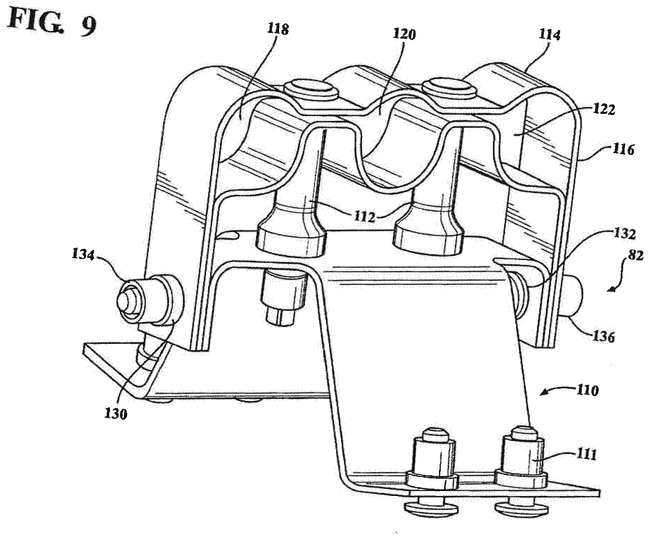

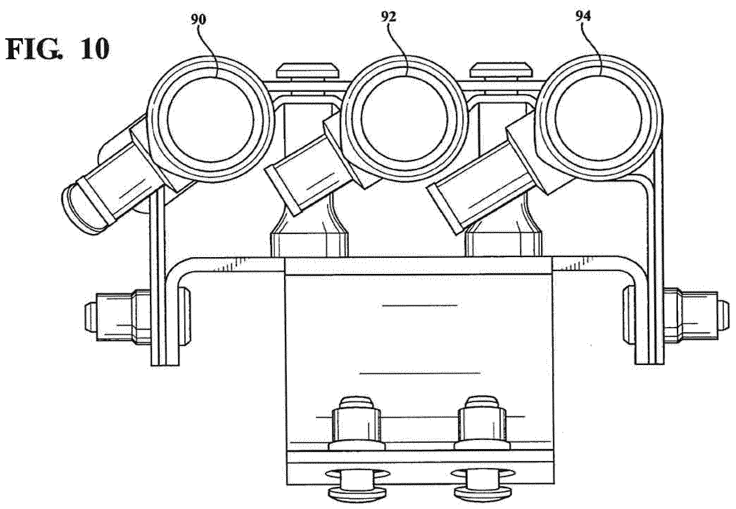

With reference to Figure 9, each of the multiple of brackets 82 generally include a base 110, standoffs 112, and an upper and lower clamping member 114, 116. The base 110 is generally "A" shaped and is mounted to the support ring 80 via fasteners 111 such as bolts, rivets, etc. The upper and lower clamping member 114, 116 form a multiple of saddles 118, 120, 122 (three shown) to receive each of the respective manifold rings 90, 92, 94 (Figure 10). Further, the standoffs 112 support the upper and lower clamping member 114, 116 which may include a slotted interface 130, 132 to receive respective cross fasteners 134, 136 such as bolts to accommodate assembly variations in the multiple of manifold subassemblies 84, 86, 88. In one example, a total of nine support brackets 54 support the manifold system 64 from the main support ring 80.

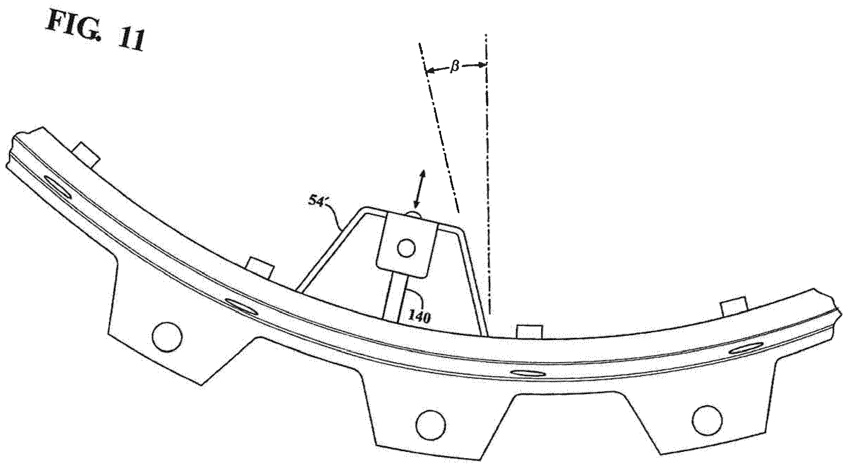

With reference to Figure 11, each of the multiple of brackets 54' may alternatively be mounted to the support ring 80 through a single threaded fastener 140 that adjusts the relative radial position of the bracket 54 with respect to the support ring 80. That is, the bracket angle A is adjusted by selective adjustment of the threaded fastener 140 to selectively provide an effectively stiff support to tailor the modal response with enough flexibility to accommodate, for example, thermal compliancy and manufacturing tolerances.

The brackets 82 are utilized to mechanically clamp all the manifold zones together and provide a flexible design that accommodates thermal motion yet facilitates manifold stabilization and friction dampening. The brackets are also readily manufactured from sheet metal and utilizes conventional fastening systems such as bolts to permit disassembly.

The fuel manifold system 64 provides the capability of removable spraybars along with a robust support system that readily withstands more severe acoustic and vibration environment. The fuel manifold system 64 also allows a segregated all orbital welded tube manifold system that is tied together via the support brackets to a uniform radial disk or cylindrical support structure.

After fabrication of each manifold subassembly 84, 86, 88 a final assembly nesting all three manifolds is made which are then connected to the external support ring 80. This arrangement facilitates the assembly fabrication process and offers ease of installation and maintainability. The manifold subassemblies 84, 86, 88 are tied together via saddle type clamps which are bolted to the support brackets. Upon installation in the engine, the individual spraybar systems are connected to each manifold subassembly 84, 86, 88 via, for example, self locking fluid fittings for final system integration. The ability to install and remove individual spraybars along with the bolted segregated manifold zone system offers a substantial installation and maintainability advantage.

It should be appreciated that like reference numerals identify corresponding or similar elements throughout the several drawings. It should also be appreciated that although a particular component arrangement is disclosed in the illustrated embodiment, other arrangements will benefit herefrom.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments to generate various means to interact the air stream intentionally with the fuel stream to enhance atomization of the fuel.

Although particular step sequences are shown, described, and claimed, it should be appreciated that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. An augmentor section (30) for a gas turbine engine (20) comprising:
a fuel manifold system (64) comprising:
a first fuel manifold (84, 86, 88);
a second fuel manifold (84, 86, 88), wherein the first fuel manifold (84, 86, 88) is at least partially nestable within the second fuel manifold (84, 86, 88);
a support ring (80) that supports the first fuel manifold (84, 86, 88) and the second fuel manifold (84, 86, 88); and
a multiple of brackets (82) that retain the first fuel manifold (84, 86, 88) and the second fuel manifold (84, 86, 88) to and/or within the support ring (80).

2. The augmentor section (30) as recited in claim 1, wherein the first fuel manifold (84, 86, 88) and the second fuel manifold (84, 86, 88) each represent a respective zone of the augmentor section (30).

3. The augmentor section (30) as recited in any preceding claim, wherein each of the multiple of brackets (82) includes a saddle (118, 120, 122) to clamp each of the first fuel manifold (84, 86, 88) and the second fuel manifold (84, 86, 88).

4. The augmentor section (30) as recited in any preceding claim, wherein each of the multiple of brackets (82) are generally "A" shaped.

5. The augmentor section (30) as recited in any preceding claim, wherein a first ring (90, 92, 94) of the first fuel manifold (84, 86, 88) is stacked adjacent to a second ring (90, 92, 94) of the second fuel manifold (84, 86, 88), the first ring (90, 92, 94) and the second ring (90, 92, 94) configured to be defined around an engine axis.

6. An augmentor section (30) of any preceding claim, wherein the first fuel manifold (84, 86, 88) and the second fuel manifold (84, 86, 88) are located radially inboard of a multiple of spraybars (62).

7. A method of assembling an augmentor fuel manifold system (64) for a gas turbine engine (20), the method comprising:
nesting a first fuel manifold (84, 86, 88) at least partially within a second fuel manifold (84, 86, 88);
mounting the first fuel manifold (84, 86, 88) and the second fuel manifold (84, 86, 88) within a support ring (80); and
mechanically mounting the first fuel manifold (84, 86, 88) and the second fuel manifold (84, 86, 88) within the support ring (80) through a multiple of brackets (82).

8. The method as recited in claim 7, wherein mechanically mounting the first fuel manifold (84, 86, 88) and the second fuel manifold (84, 86, 88) within the support ring (80) through the multiple of brackets (82) includes clamping the first fuel manifold (84, 86, 88) and the second fuel manifold (84, 86, 88) within the support ring (80) to each of the multiple of brackets (82).

9. The method as recited in claims 7 or 8, wherein nesting the first fuel manifold (84, 86, 88) at least partially within the second fuel manifold (84, 86, 88) includes stacking a first ring (90, 92, 94) of the first fuel manifold (84, 86, 88) adjacent to a second ring (90, 92, 94) of the second fuel manifold (84, 86, 88), the first ring (90, 92, 94) and the second ring (90 ,92, 94) defined around the engine axis.

10. The method as recited in any of claims 7 to 9, further comprising attaching the first fuel manifold (84, 86, 88) and the second fuel manifold (84, 86, 88) to a multiple of spraybars (62), the first fuel manifold (84, 86, 88) and the second fuel manifold (84, 86, 88) located radially inboard of the spraybars (62).

11. The method as recited in any of claims 7 to 10, further comprising individually fastening the first fuel manifold (84, 86, 88) and the second fuel manifold (84, 86, 88) such that the first fuel manifold (84, 86, 88) and the second fuel manifold (84, 86, 88) are individually maintainable.

## Patentansprüche

1. Nachbrennerabschnitt (30) für einen Gasturbinenmotor (20), umfassend:
ein Kraftstoffverteilersystem (64), umfassend:
einen ersten Kraftstoffverteiler (84, 86, 88);
einen zweiten Kraftstoffverteiler (84, 86, 88), wobei der erste Kraftstoffverteiler (84, 86, 88) zumindest teilweise innerhalb des zweiten Kraftstoffverteilers (84, 86, 88) verschachtelbar ist;
einen Stützring (80), der den ersten Kraftstoffverteiler (84, 86, 88) und den zweiten Kraftstoffverteiler (84, 86, 88) stützt; und
eine Vielzahl von Klammern (82), die den ersten Kraftstoffverteiler (84, 86, 88) und den zweiten Kraftstoffverteiler (84, 86, 88) an dem und/oder innerhalb des Stützring(s) (80) hält.

2. Nachbrennerabschnitt (30) nach Anspruch 1, wobei der erste Kraftstoffverteiler (84, 86, 88) und der zweite Kraftstoffverteiler (84, 86, 88) jeweils einen jeweiligen Bereich des Nachbrennerabschnitts (30) darstellen.

3. Nachbrennerabschnitt (30) nach einem vorhergehenden Anspruch, wobei jede aus der Vielzahl von Klammern (82) einen Sattel (118, 120, 122) beinhaltet, um jeden von dem ersten Kraftstoffverteiler (84, 86, 88) und dem zweiten Kraftstoffverteiler (84, 86, 88) festzuklemmen.

4. Nachbrennerabschnitt (30) nach einem vorhergehenden Anspruch, wobei jede aus der Vielzahl von Klammern (82) im Allgemeinen "A"-förmig ist.

5. Nachbrennerabschnitt (30) nach einem vorhergehenden Anspruch, wobei ein erster Ring (90, 92, 94) des ersten Kraftstoffverteilers (84, 86, 88) benachbart zu einem zweiten Ring (90, 92, 94) des zweiten Kraftstoffverteilers (84, 86, 88) gestapelt ist, wobei der erste Ring (90, 92, 94) und der zweite Ring (90, 92, 94) konfiguriert sind, sodass sie um eine Motorachse herum definiert sind.

6. Nachbrennerabschnitt (30) nach einem vorhergehenden Anspruch, wobei sich der erste Kraftstoffverteiler (84, 86, 88) und der zweite Kraftstoffverteiler (84, 86, 88) radial einwärts einer Vielzahl von Sprühstäben (62) befinden.

7. Verfahren zum Zusammenbauen eines Nachbrennerkraftstoffverteilersystems (64) für einen Gasturbinenmotor (20), wobei das Verfahren Folgendes umfasst:
Verschachteln eines ersten Kraftstoffverteilers (84, 86, 88) zumindest teilweise innerhalb eines zweiten Kraftstoffverteilers (84, 86, 88);
Montieren des ersten Kraftstoffverteilers (84, 86, 88) und des zweiten Kraftstoffverteilers (84, 86, 88) innerhalb eines Stützrings (80); und
mechanisches Montieren des ersten Kraftstoffverteilers (84, 86, 88) und des zweiten Kraftstoffverteilers (84, 86, 88) innerhalb des Stützrings (80) durch eine Vielzahl von Klammern (82) .

8. Verfahren nach Anspruch 7, wobei das mechanische Montieren des ersten Kraftstoffverteilers (84, 86, 88) und des zweiten Kraftstoffverteilers (84, 86, 88) innerhalb des Stützrings (80) durch die Vielzahl von Klammern (82) das Klemmen des ersten Kraftstoffverteilers (84, 86, 88) und des zweiten Kraftstoffverteilers (84, 86, 88) innerhalb des Stützrings (80) an jede aus der Vielzahl von Klammern (82) beinhaltet.

9. Verfahren nach Anspruch 7 oder 8, wobei das Verschachteln des ersten Kraftstoffverteilers (84, 86, 88) zumindest teilweise innerhalb des zweiten Kraftstoffverteilers (84, 86, 88) das Stapeln eines ersten Rings (90, 92, 94) des ersten Kraftstoffverteilers (84, 86, 88) benachbart zu einem zweiten Ring (90, 92, 94) des zweiten Kraftstoffverteilers (84, 86, 88) beinhaltet, wobei der erste Ring (90, 92, 94) und der zweite Ring (90, 92, 94) um die Motorachse herum definiert sind.

10. Verfahren nach einem der Ansprüche 7 bis 9, ferner umfassend das Anbringen des ersten Kraftstoffverteilers (84, 86, 88) und des zweiten Kraftstoffverteilers (84, 86, 88) an einer Vielzahl von Sprühstäben (62), wobei sich der erste Kraftstoffverteiler (84, 86, 88) und der zweite Kraftstoffverteiler (84, 86, 88) radial einwärts der Sprühstäbe (62) befinden.

11. Verfahren nach einem der Ansprüche 7 bis 10, ferner umfassend das individuelle Befestigen des ersten Kraftstoffverteilers (84, 86, 88) und des zweiten Kraftstoffverteilers (84, 86, 88), sodass der erste Kraftstoffverteiler (84, 86, 88) und der zweite Kraftstoffverteiler (84, 86, 88) individuell wartbar sind.

## Revendications

1. Section de post-combustion (30) pour moteur à turbine à gaz (20), comprenant :
un système de collecteur de carburant (64) comprenant :
un premier collecteur de carburant (84, 86, 88) ;
un second collecteur de carburant (84, 86, 88), dans laquelle le premier collecteur de carburant (84, 86, 88) est au moins partiellement emboîtable dans le second collecteur de carburant (84, 86, 88) ;
un anneau de support (80) qui soutient le premier collecteur de carburant (84, 86, 88) et le second collecteur de carburant (84, 86, 88) ; et
une pluralité de pattes de fixation (82) qui maintiennent le premier collecteur de carburant (84, 86, 88) et le second collecteur de carburant (84, 86, 88) contre et/ou dans l'anneau de support (80).

2. Section de post-combustion (30) selon la revendication 1, dans laquelle le premier collecteur de carburant (84, 86, 88) et le second collecteur de carburant (84, 86, 88) représentent chacun une zone respective de la section de post-combustion (30).

3. Section de post-combustion (30) selon une quelconque revendication précédente, dans laquelle chacune de la pluralité de pattes de fixation (82) comprend une selle (118, 120, 122) pour serrer chacun du premier collecteur de carburant (84, 86, 88) et du second collecteur de carburant (84, 86, 88).

4. Section de post-combustion (30) selon une quelconque revendication précédente, dans laquelle chacune de la pluralité de pattes de fixation (82) est généralement en forme de « A ».

5. Section de post-combustion (30) selon une quelconque revendication précédente, dans laquelle un premier anneau (90, 92, 94) du premier collecteur de carburant (84, 86, 88) est empilé de manière adjacente à un second anneau (90, 92, 94) du second collecteur de carburant (84, 86, 88), le premier anneau (90, 92, 94) et le second anneau (90, 92, 94) étant conçus pour être définis autour d'un axe du moteur.

6. Section de post-combustion (30) selon une quelconque revendication précédente, dans laquelle le premier collecteur de carburant (84, 86, 88) et le second collecteur de carburant (84, 86, 88) sont situés radialement à l'intérieur d'une pluralité de barres de pulvérisation (62).

7. Procédé d'assemblage d'un système de collecte de carburant (64) de chambre de post-combustion pour moteur à turbine à gaz (20), le procédé comprenant :
l'emboîtement au moins partiel d'un premier collecteur de carburant (84, 86, 88) dans un second collecteur de carburant (84, 86, 88) ;
le montage du premier collecteur de carburant (84, 86, 88) et du second collecteur de carburant (84, 86, 88) dans un anneau de support (80) ; et
le montage mécanique du premier collecteur de carburant (84, 86, 88) et du second collecteur de carburant (84, 86, 88) dans l'anneau de support (80) au moyen d'une pluralité de pattes de fixation (82).

8. Procédé selon la revendication 7, dans lequel le montage mécanique du premier collecteur de carburant (84, 86, 88) et du second collecteur de carburant (84, 86, 88) dans l'anneau de support (80) au moyen de la pluralité de pattes de fixation (82) comprend le serrage du premier collecteur de carburant (84, 86, 88) et du second collecteur de carburant (84, 86, 88) dans l'anneau de support (80) à l'aide de chacune de la pluralité de pattes de fixation (82).

9. Procédé selon la revendication 7 ou 8, dans lequel l'emboîtage au moins partiel du premier collecteur de carburant (84, 86, 88) dans le second collecteur de carburant (84, 86, 88) comprend l'empilage d'un premier anneau (90, 92, 94) du premier collecteur de carburant (84, 86, 88) de manière adjacente à un second anneau (90, 92, 94) du second collecteur de carburant (84, 86, 88), le premier anneau (90, 92, 94) et le second anneau (90, 92, 94) étant définis autour de l'axe du moteur.

10. Procédé selon l'une quelconque des revendications 7 à 9, comprenant en outre la fixation du premier collecteur de carburant (84, 86, 88) et du second collecteur de carburant (84, 86, 88) à une pluralité de barres de pulvérisation (62), le premier collecteur de carburant (84, 86, 88) et le second collecteur de carburant (84, 86, 88) étant situés radialement à l'intérieur des barres de pulvérisation (62).

11. Procédé selon l'une quelconque des revendications 7 à 10, comprenant en outre la fixation séparée du premier collecteur de carburant (84, 86, 88) et du second collecteur de carburant (84, 86, 88) de sorte que le premier collecteur de carburant (84, 86, 88) et le second collecteur de carburant (84, 86, 88) peuvent être entretenus séparément.
